# EUROPEAN PATENT APPLICATION

(11) **EP 1 039 661 A1**
(43) Date of publication of application: **27.09.2000**
(21) Application number: 99104297.9
(22) Date of filing: 03.03.1999
(51) Int. Cl.: H04B 7/26

(54) **Multicast channel for a CDMA system**

(71) Applicant: Sony International (Europe) GmbH, 50829 Köln-Ossendorf (DE)
(72) Inventor: Böhnke, Ralf c/o Sony International (Europe), 70736 Fellbach (DE); Izumi, Seichi c/o Sony International (Europe), 70736 Fellbach (DE); Halton, John c/o Sony International (Europe), 70736 Fellbach (DE); James, Paul c/o Sony International (Europe), 70736 Fellbach (DE); Jürgensen, Jens-Uwe c/o Sony Int. (Europe), 70736 Fellbach (DE); Kornprobst, Stefan c/o Sony International (Europe), 70736 Fellbach (DE); Stirling-Gallacher, Richard c/o Sony Int. (Europe), 70736 Fellbach (DE)
(74) Representative: Rupp, Christian, Dipl.Phys.

(57) **Abstract**

The present invention proposes a multicast channel for CDMA systems which offers different levels of services depending on the distance between the mobile station MS and the base station BS. A hierarchical spread spectrum multicast channel is proposed, which is transmitted by the base station on parallel codes and received by the mobile station either by a plurality of codes or a single code.

## Description

The present invention relates to a method for the wireless transmission of data according to a spread spectrum technique, a transmitter for the wireless transmission of data according to a spread spectrum technique as well as to a wireless transmission system comprising such a transmitter.

The present invention generally relates to multicast channels for example for CDMA systems. If a multicast channel is implemented in the downlink with only one data rate (one level of service ) for the entire cell, the service has to be transmitted with a maximum power. The overall system capacity will therefore be decreased due to the interference which this large transmitted power presents to adjacent cells.

From EP-A-0828355 a multicast transmission system for DS-CDMA cellular telephone is known. Thereby a mobile station requests a multicast service by use of a service option and a base station transmits to the mobile station a long code mask and code channel needed to receive the multicast service. No reverse channel is used so that an unlimited number of terminals may receive the multicast service. According to this prior art the same service is transmitted over the entire cell. The multicast channel is mapped on only one spreading and one scrambling.

From JP-A-09023207 an information multiplexing method used in a CATV system is known involving adding and carrying out multiplexing of each output from a set of CDMA diffusion parts. The method involved uses a set of hierarchization parts which changes a video information to standard information on fixed rate and a quality improvement information on a variable range. A number of CDMA diffusion parts are connected to the output of respective hierarchization parts. Each CDMA diffusion part comprises a set of direct diffusion processing parts which perform diffusion to the output of respective hierarchization parts directly. Each CDMA diffusion part also comprises a set of modulation parts and a set of variable gain parts which are sequentially connected to respective direct diffusion processing parts. Each modulation part modulates diffused modulation to carry out cable or wireless transmission freely. Each variable gain part adjust an electric power based on the importance of each information. An adder is provided which adds and carries out the multiplexing of each output from the CDMA diffusion parts. According to this known idea therefore a signal is divided to a fundamental part and additional parts. These parts are multiplied with spreading codes of strong (fundamental) and weak (additional) orthogonality. Spreading codes with different grades of orthogonality therefore are provided. The service covers the entire cell. The data rates of the additional parts are variable.

The object of the present invention therefore is to provide a technique for decreasing the interference.

The object is achieved by means of the features of the independent claims. The dependent claims develop the central idea of the present invention.

According to the present invention therefore a method for the wireless transmission of data according to a spread spectrum technique such a CDMA technique is provided. A data stream is spread respectively with different spreading factors. Different level of services are transmitted simultaneously, wherein each level of service is based on a differently based data stream. Thereby the level of the highest detectable service decreases with increasing distance to a transmitter (base station).

The different level of services can be generated by spreading the data stream respectively with different spreading codes having different spreading factors. Thereby a spreading code with a high spreading factor corresponds to a low level of service.

The different level of services can be transmitted in parallel in time.

Higher level of services can transmit additional information for the respectively lower levels of services such that the plurality of level of services must be received in a time parallel manner to detect higher levels of services (multicode reception).

Alternatively in each level of service all information necessary for the corresponding level of service can be transmitted such that a single code despreading detection is sufficient on a receiving side.

The spread data can be scrambled before being transmitted over the air, wherein the data spread respectively with spreading codes can be respectively scrambled with different scrambling codes.

The present invention furthermore proposes a transmitter for the wireless transmission of data according to a spread spectrum technique, such as a CDMA technique. The transmitter comprises a device for spreading a data stream respectively with different spreading factors. Furthermore the transmitter (base station) comprises a device for transmitting different levels of services simultaneously, wherein the different levels of services are respectively based on one of the differently spread data streams.

The different levels of services can be generated by a spreading device for spreading the data stream respectively with different spreading codes having different spreading factors wherein a spreading code with a high spreading factor corresponds to a low level of service.

The transmitter can be adapted to transmit the different levels of services parallel in time.

According to the present invention furthermore a wireless transmission system is proposed comprising a transmitter as set forth above. Furthermore the wireless transmission system, which can be a CDMA transmission system, comprises a multicode receiver provided a plurality of levels of services in a time parallel manner, wherein each of the different levels of services is despread with another spreading factor.

Alternatively a single code receiver can be provided in the case that each level of services all information necessary for the corresponding level of services is transmitted.

In the following embodiments of the present invention will be explained with reference to the figures of the enclosed drawings to demonstrate further features of the object and advantages of the present invention.
Fig. 1 shows a schematical view of a wireless transmission system according to the present invention,
Fig. 2 shows a diagram for a multicast transmission with different spreading codes according to the present invention,
Fig. 3 shows a still further example of multicast transmission with different spreading codes according to the present invention,
Fig. 4 shows the internal structure of a transmitter such as a base station according to the present invention, and
Fig. 5 shows a further embodiment for the internal structure of a transmitter such as a base station according to the present invention.

As has already been set forth above, the present invention deals with the problem that, if a multicast channel is implemented for example in the downlink from the base station to a mobile station with only one level of service for the entire cell, the service has to be transmitted to a maximum power. The overall system capacity will therefore be decreased due to the interference which this large transmitted power presents to adjacent cells.

According to the present invention by incorporating different levels of services (with an associated processing gain) the interference will be lower and therefore the system capacity will be improved.

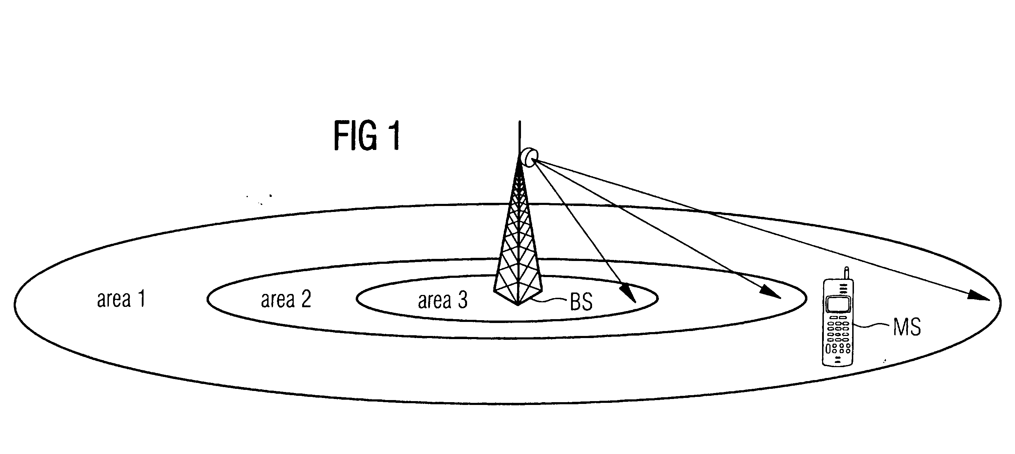

As shown in the example of Fig. 1 a multicast channel which can be a CDMA based channel offers different levels of services depending on the distance between mobile station MS and base station BS. Therefore in the area 1, the area 2 and the area 3, respectively, different levels of services are proposed to the user of mobile stations MS. Therefore according to the present invention different spreading codes are used in one cell containing the areas 1, 2 and 3. The mapping of the levels of services on the physical channel is accomplished by using several spreading codes in one cell having respectively a different spreading factor. In other words, several spreading codes respectively having different links and therefore different spreading factors are used within one cell.

This approach is based on the that the received transmission energy at the mobile station MS is depending on the product (despreading gain x transmission power). The despreading gain is a function of the spreading factor. Therefore in case of a higher spreading factor the transmission power of the base station can be reduced without essentially changing the reception quality. In short words, for services based on a code with a big spreading factor a necessary transmission power can be lower. However, when using a spreading code with a huge spreading factor the effective bit rate is lowered and therefore the level of service is lower.

For example one level of service can use a spreading code with a spreading factor of 128, wherein this basic level of service covers the entire cell (area 1, 2 and 3 in Fig. 1). This level of service can e.g. offer a video service in black and white. Another level of service can use a spreading code with a spreading factor of e.g. 64, wherein this level of service covers only area 2 and 3 of the cell. This level of service offers the same video service as the basic level of service, but in colour. The third and highest level of service can use a spreading code with a spreading factor of 32 and covers only area 3 of the cell, which is the area closest to the base station BS. This level of service can e.g. offer colour video service with additional multimedia services.

The idea of the present invention is based on the fact that the longer the spreading code, the higher is the despreading gain on the receiving side (mobile station MS). Furthermore the effective bit rate is a function of the product (symbol/bit x spreading factor). In other words, in case of a constant number of symbols per bit the effective bit rate decreases with increasing spreading factor (which corresponds to increasing despreading gain).

The multicast channel scheme as shown in Fig. 1 is applicable both in the case when any mobile station within an area participates in the service (i.e. broadcast service) and in the case when only a subset of the mobile stations within an area (cell) participates in the service (i.e. group cast service).

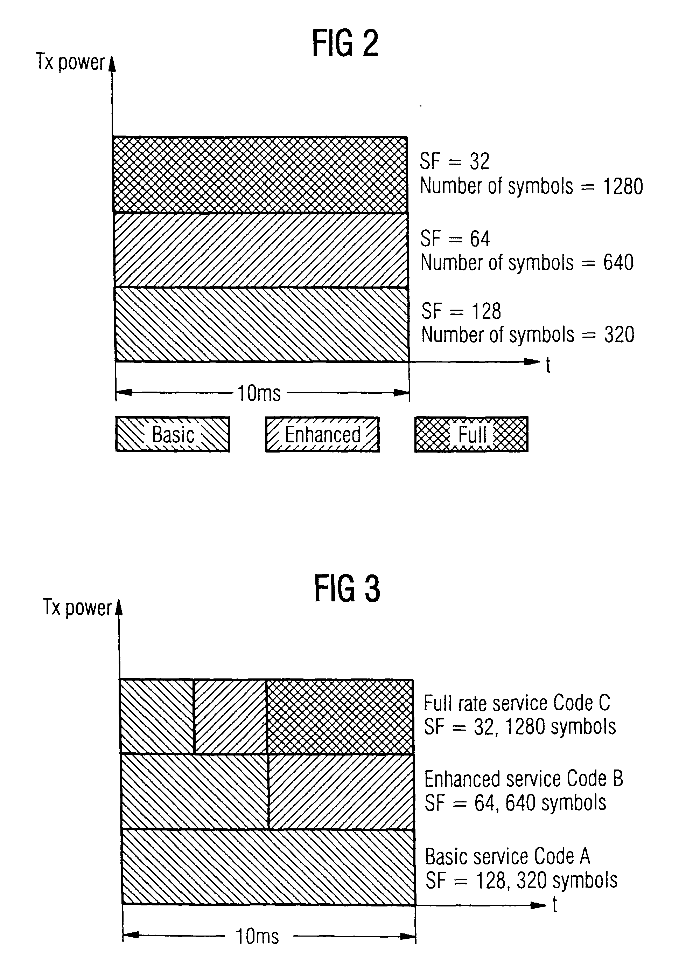

With reference to Fig. 2 and 3 of the enclosed drawings now different physical channel mappings according to the present invention will be explained.

Fig. 2 shows a further example of physical channel mapping according to the present invention. Fig. 2 describes a hierarchical spread spectrum multicast channel, which is e.g. transmitted by the base station BS on parallel codes and received by the mobile station MS on parallel codes. This parallel transmission and reception leads to an optimum spreading code resource usage, however, a mobile station is required which has the capability to do multicode reception received at this parallel transmitted codes according to Fig. 2. It is to be noted that Fig. 2 shows just an example and also spreading codes with other spreading factors or also a discontinuous transmission is possible. The first level of service covering area 1, 2 and 3 is spread with a spreading code having a spreading factor of 128. A mobile station MS receiving the first level of service gets the data needed for a basic multicast service. The second level of service covering area 2 and 3 in Fig. 1 is spread with a spreading code having a spreading factor of 64. A mobile station MS receiving the second level of service also receives the first level of service and both levels of services are offering an enhanced multicast service.

Finally the third level of service covering area 3 in Fig. 1 is spread with a spreading code having a spreading factor of 32. A mobile station receiving the third level of service also receives the first and second level of service and all three together are needed for a full rate multicast service.

In case the physical channel mapping according to Fig. 2 is used, a mobile station with a capability for multicode reception is needed in case a service level higher than the lowest level to be received via this multicast channel.

However, the physical channel mapping according to Fig. 2 has the advantage of an optimum spreading code resource usage due to the fact that only resources which are really required are used for the multicast service.

Alternatively in accordance with Fig.2 each spreading factor can also contain a different level of data compression of the same source data stream. This physical channel mapping has the advantage that only a low receiver complexity is necessary due to the fact that no multi code receiver is necessary in the mobile station MS and a single code receiver is sufficient.

Fig. 3 shows how the physical channel mapping of the different levels of services can be done on the transmitter side (base station BS). Note that the same length of 10ms is a usual frame length. Fig. 3 shows only one possible example; of course, other spreading codes with other spreading factors or also a discontinuous transmission is possible. The first level of service covering area 1, 2 and 3 in Fig. 1 uses a spreading factor of 128 and offers the data needed for a basic multicast service such as e.g. black and white video. The second level of service covering area 2 and 3 in Fig. 1 uses a spreading factor of 64 and offers the data needed for basic multicast service like the first level (basic level) of service does, and in addition this second level offers the data needed for an enhanced multicast service. The third level of service covering the area 3 closest to the base station BS in Fig. 1 uses a spreading factor of 32. This level of service offers all the data needed for the basic, the enhanced and the multimedia multicast service. Fig. 3 therefore is one example for a parallel transmission of different levels of services.

The physical channel mapping as shown in Fig. 3 has the advantages that only a low receiver complexity is necessary due to the fact that no multicode receiver is necessary in the mobile station MS and a single code receiver is sufficient.

The physical layers according to Fig. 3 have the disadvantage that same data must be transmitted twice in a redundant way but with different processing gains by the base station. This can lead to non-optimum code resource usage. However, the multicast channel in this can be received by the mobile station on a single code which reduces the receiver complexity.

Furthermore a coherent combining of the information received on the different codes is possible on the receiver sides (mobile station MS), if the mobile station MS is capable of multicode reception. In this case due to the coherent combining of the information the signal to noise ratio of the reception can be enhanced.

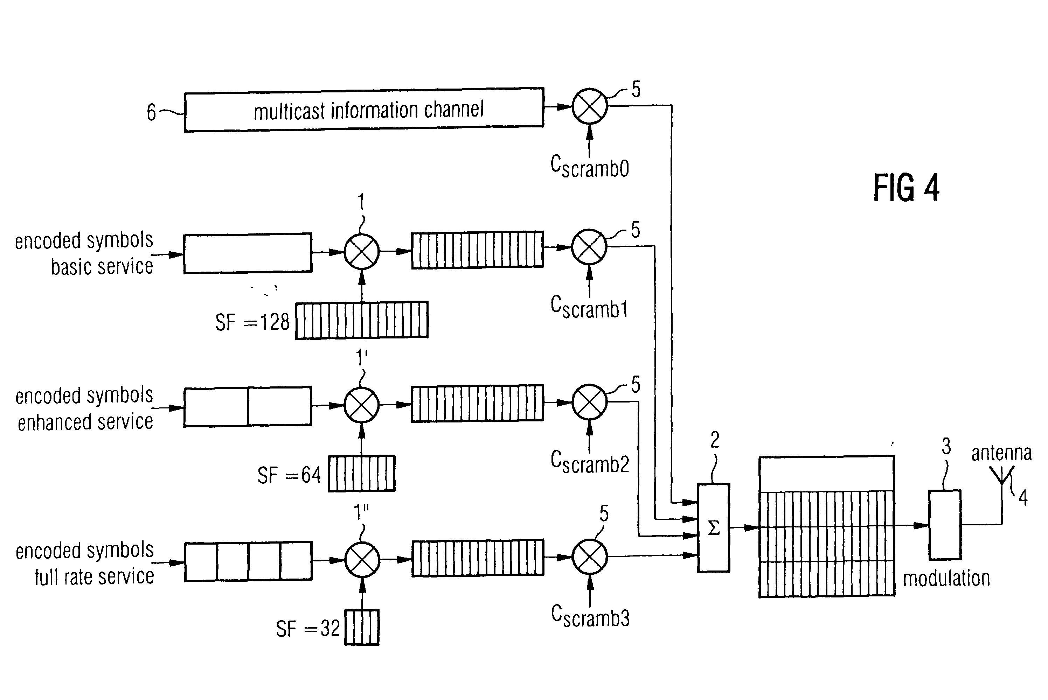

Fig. 4 shows a first embodiment of the internal structure of a transmitter according to the present invention.

Encoded symbols of a basic service are spread in a spreading unit 1 e.g. with a spreading code having a spreading factor of 128. Then these spread data are scrambled in a scrambling unit 5 with a first scrambling code C_{SCRAMB1}.

Coded symbols of an enhanced service are spread in a further spreading unit 1' with a spreading code having a spreading factor of e.g. 64. These spread encoded symbols are then scrambled in another scrambling unit 5 with another scrambling code C_{SCRAMB2}.

Encoded symbols of a full rate service are spread in a spreading unit 1" with a spreading code having a spreading factor of 32. Then these spread encoded symbols of full rate service are scrambled in another scrambling unit 5 with another third scrambling code C_{SCRAMB3}.

The scrambled data from the basic service, the enhanced service and the full rate service are then combined in a combining unit 2, modulated in a modulator 3 and then sent wirelessly to the receiving sides by means of an antenna 4.

Along with the encoded spread and scrambled symbols of the basic service, the enhanced service and the fill rate service, scrambled information data are combined in combining unit 2. These information data are data from a multicast information channel 6 which have been scrambled within still another scrambling code C_{SCRAMB0} in a scrambling unit 5.

The multicast information channel can transmit the following information:
- the number of hierarchies (number of channels building up the multicast channel),
- the spreading factors used for the multicast channel, and
- the spreading code allocation method.

The multicast channel is transmitted over the entire coverage of a base station BS transmitting the multicast channel. The information needed for detecting the multicast channel can be provided e.g. in UMTS (universal mobile telecommunication standard) by means of the well-known FACH or BCCH.

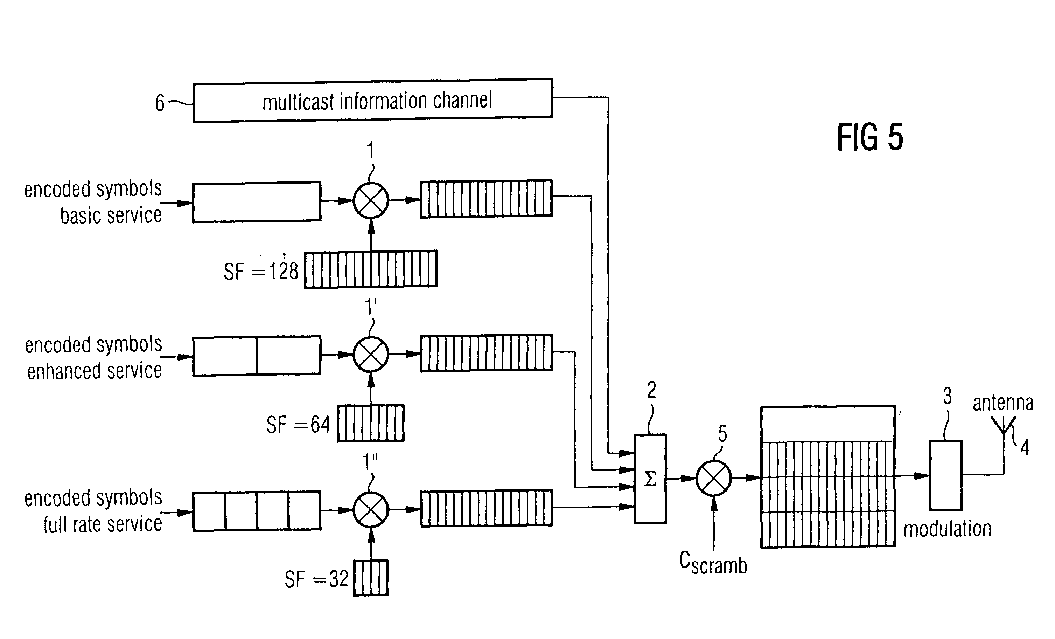

Fig. 5 shows another embodiment for the internal structure of a wireless transmitter according to the present invention.

According to this embodiment the data from multicast information channel 6, the spread symbols from a basic service, the spread symbols from an enhanced service and the spread symbols from a full rate service are first combined in the combining unit 2 and then scrambled to the common scrambling code C_{SCRAMB} in a scrambling unit 5 before they are passed to the modulator 3 and sent to the receiving sides of the antenna 4. Note that also according to this example the encoded symbols of the basic service, the encoded symbols of the enhance service and the encoded symbols of the full rate service are respectively spread in the spreading units 1, 1' and 1" with spreading factors having respectively different spreading factors.

The information to be transmitted in order to control the multicast channel can be seen as either a part of the BCH or is a separate logical channel i.e. a multicast control channel at the layer 2 or 3 of the OSI layer model. In the former case the information would be mapped to the BCH physical channel, whereas in the latter case a new form of physical control channel may need to be defined.

According to the present invention, by incorporating different levels of service (transmitted with different spreading ratios and therefore different processing gains) the interference in a wireless transmission system can be reduced and therefore the system capacity can be improved. The invention furthermore proposes a hierarchical spread spectrum multicast channel.

## Claims

1. Method for the wireless transmission of data according to a spread spectrum technique,
characterized by the following steps:
- spreading (1) a data stream respectively with different spreading factors,
- transmitting (4) different levels of services simultaneously, wherein each level of service is based on one of the plurality of differently spread data streams, wherein the level of highest detectable service decreases with increasing distance to a transmitter (BS).

2. Method according to claim 1,
characterized in that
the different levels of services are generated by spreading (1) the data stream respectively with different spreading codes having different spreading factors, wherein a spreading code with a high spreading factor corresponds to a low level of service.

3. Method according to claim 1 or 2,
characterized in that
a CDMA technique is used.

4. Method according to anyone of the preceding claims,
characterized in that
the different levels of services are transmitted (4) parallel in time.

5. Method according to claim 4,
characterized in that
higher levels of services transmit additional information for the respectively lower levels of services such that a plurality of levels of services must be received in a time parallel manner to detect higher levels of services.

6. Method according to claim 4,
characterized in that
in each level of service all information necessary for the corresponding level of service is transmitted (4) such that a single code despreading detection is sufficient on a receiving side (MS).

7. Method according to anyone of the preceding claims,
characterized in that
the spread data are scrambled (5) before being transmitted (4).

8. Method according to claim 7,
characterized in that
data spread (1) respectively with different spreading codes are respectively scrambled (5) with different scrambling codes.

9. Transmitter for the wireless transmission of data according to a spread spectrum technique,
comprising:
- a device (1) for spreading a data stream respectively with different spreading factors,
- a device (3, 4) for transmitting different levels of services simultaneously, wherein each of the levels of services is based on one of the plurality of differently spread data streams.

10. Transmitter according to claim 9,
characterized in that
the different levels of services are generated by a device (1, 1', 1") spreading the data stream respectively with different spreading codes having different spreading factors, wherein a spreading code with a high spreading factor corresponds to a low level of service.

11. Transmitter according to claim 9 or 10,
characterized in that
it is a CDMA transmitter (BS).

12. Transmitter according to anyone of claims 9 to 11,
characterized in that
the transmitter (BS) is adapted to transmit (4) the different levels of services are parallel in time.

13. Wireless transmission system,
characterized in that
it comprises a transmitter (BS) according to anyone of claims 9 to 12, and a multicode receiver (MS) is provided to receive a plurality of levels of services in a time parallel manner, wherein each of the different levels of services is despread with another spreading factor.

14. System according to claim 12,
characterized in that
a single code receiver (MS) is provided, wherein in each level of services all information necessary for the corresponding level of services is transmitted (4).
